# EUROPEAN PATENT APPLICATION

(11) **EP 2 230 877 A1**
(43) Date of publication of application: **22.09.2010**
(21) Application number: 10002533.7
(22) Date of filing: 10.03.2010
(51) Int. Cl.: H04W 76/04

(54) **Method of managing discontinious reception functionality for multiple component carriers and related communication device**

(30) Priority: 17.03.2009 US 160714 P
(71) Applicant: HTC Corporation, Taoyuan City Taoyuan County (TW)
(72) Inventor: Wu, Chih-Hsiang, Taoyuan City Taoyuan County (TW)
(74) Representative: Hager, Thomas Johannes

(57) **Abstract**

A method of managing discontinuous reception (DRX) functionality in multiple component carriers for a mobile device of a wireless communication system, which includes jointly or separately managing DRX functionality of a plurality of component carriers.

## Description

The present invention relates to a method and apparatus for managing discontinuous reception functionality for multiple component carriers in a wireless communication system.

Long Term Evolution wireless communication system (LTE system), an advanced high-speed wireless communication system established upon the 3G mobile telecommunication system, supports only packet-switched transmission, and tends to implement both Medium Access Control (MAC) layer and Radio Link Control (RLC) layer in one single communication site, so that the system structure becomes simple.

According to structure of the LTE system, discontinuous reception (DRX) functionality allows a user equipment (UE) with a signal component carrier to monitor signaling of a Physical Downlink Control Channel (PDCCH) only during certain configured periods in order to save UE power.

Toward advanced high-speed wireless communication system, such as transmitting data in a higher peak data rate, LTE-Advanced is standardized by the 3rd Generation Partnership Project (3GPP) as an enhancement of LTE system. LTE-Advanced targets faster switching between power states, improves performance at the cell edge, and includes subjects, such as bandwidth extension, coordinated multipoint transmission/reception (COMP), uplink multiple input multiple output (MIMO) extension up to 4x4, downlink MIMO extension up to 4x4, relaying, and etc.

Based on a concept of bandwidth extension, carrier aggregation is introduced to the LTE-Advanced for extension to wider bandwidth, where two or more component carriers are aggregated, for supporting wider transmission bandwidths e.g. up to 100MHz and for spectrum aggregation. According to carrier aggregation capability, multiple component carriers are aggregated into overall wider bandwidth, wherein a user equipment (UE) can establish multiple links corresponding to the multiple component carriers for simultaneously receiving and/or transmitting on each component carrier. Each component carrier includes a hybrid automatic repeat request (HARQ) entity and a transport block.

However, in the LTE system, each UE is only allowed to use a single component carrier, so the UE monitors PDCCH for the single component carrier only during DRX functionality performance. Since the UE connects to multiple component carriers according to the LTE Advancement, the prior art does not clearly how the DRX functionality applied in the UE with multiple component carriers. The management of the multiple component carriers for DRX functionality is never concerned. Improper configuration on DRX functionality with multiple component carriers causes UE power wastes or inefficiency of signaling bandwidth utilization.

This in mind, the present invention aims at providing a method and apparatus for managing discontinuous reception (DRX) functionality for multiple component carriers in a wireless communication system to solve the abovementioned problem.

This is achieved by a method and apparatus for managing DRX functionality for multiple component carriers in a wireless communication system according to claims 1, 2, 8, 9, 13 and 14. The dependent claims pertain to corresponding further developments and improvements.

As will be seen more clearly from the detailed description following below, the claimed method for managing DRX functionality for multiple component carriers in a wireless communication system comprising separately or jointly managing DRX functionality of a plurality of component carriers.

In the following, the invention is further illustrated by way of example, taking reference to the accompanying drawings. Thereof
Fig. 1 is a schematic diagram of a wireless communication system with multiple component carriers,
Fig. 2 is a schematic diagram of an exemplary communication device, and
Fig. 3-5 is flowcharts of exemplary processes.

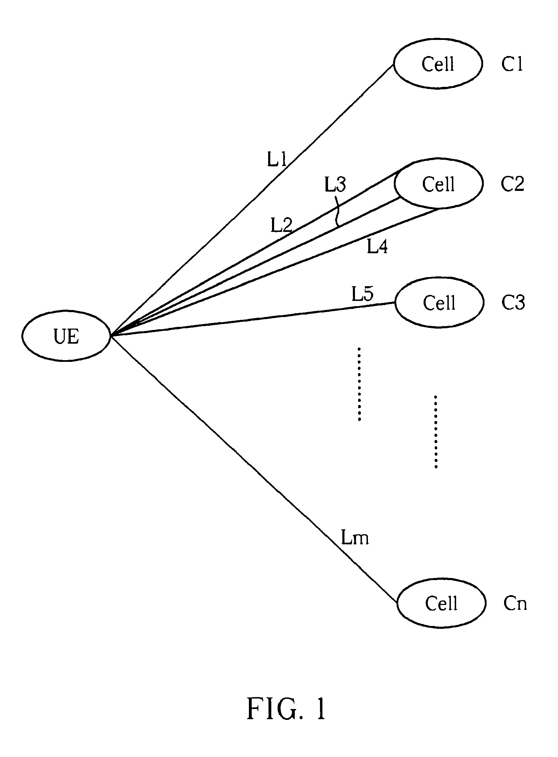

Please refer to Fig. 1, which illustrates a schematic diagram of connections between a UE and cells C1-Cn in a wireless communication system. In Fig. 1, the cells C1-Cn and the UE are communicated through links L1 -Lm each corresponding to a component carrier configured in the UE, and each supports a LTE radio access technology (RAT) or an E-UTRAN (Evolved Universal Terrestrial Radio Access Network) RAT. For example, the UE is communicated with the cell C1 through the link L1, communicated with the cell C2 through the links L2-L4, and so on. The component carriers of the links can be the same component carrier frequency band if the component carriers are associated to different cells. For example, the component carrier of any of the links L2-L4 can use the same frequency band as the component carrier of the link L1.

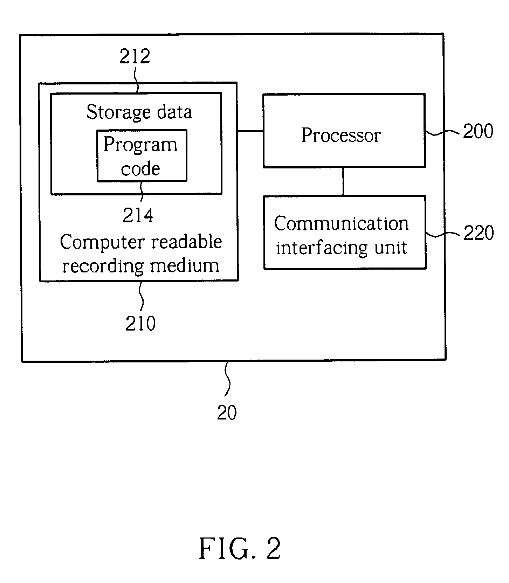

Please refer to Fig. 2, which illustrates a schematic diagram of an exemplary communication device 20. The communication device 20 can be the UE shown in Fig. 1 and includes a processor 200, a computer readable recording medium 210, and a communication interfacing unit 220. The computer readable recording medium 210 is any data storage device that stores storage data 212, including program code 214, thereafter read and processed by the processor 200. Examples of the computer readable recording medium 210 include a subscriber identity module (SIM), read-only memory (ROM), random-access memory (RAM), CD-ROMs, magnetic tapes, hard disks, optical data storage devices, and carrier waves (such as data transmission through the Internet). The communication interfacing unit 220 is preferably a radio transceiver and accordingly exchanges wireless signals with a network (i.e. the cells C1-Cn) according to processing results of the processor 200.

The program code 214 includes program code of a Medium Access Control (MAC) layer which can manage discontinuous reception (DRX) functionality for multiple component carriers. In addition, program code of a Radio Resource Control (RRC) layer is included in the program code 214 and used for configuring DRX functionality to the UE, and is responsible for generating or releasing radio bearers (RBs) including data RBs (DRBs) and signaling RBs (SRBs). Through use of the SRBs, the RRC layer and the cells C1-Cn can exchange RRC messages for configuration of DRX functionality, such as a DRX command for activating the DRX functionality for certain component carrier, Active Time, Short DRX cycle, Long DRX cycle, etc. Program code of a physical layer is included in the program code 214 and used for monitoring Physical Downlink Control Channel (PDCCH) signaling (e.g a PDCCH grant) on certain periods, such as an on-duration of a Short DRX cycle, when the DRX functionality is used. With the Active Time, Short DRX cycle, Long DRX cycle, the communication device 20 is able to know when to start to monitor the PDCCH.

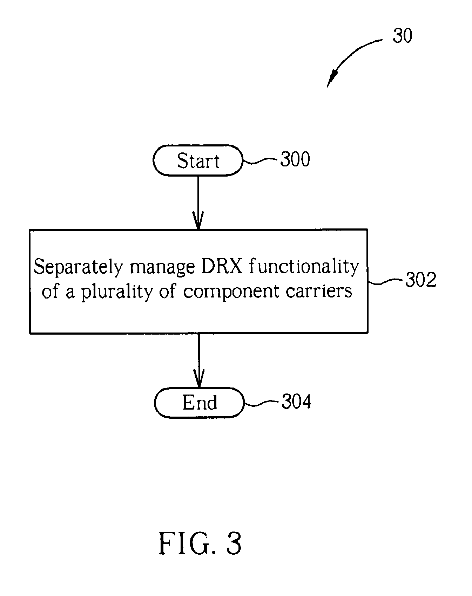

Management for DRX functionality can be made mainly under three concerns: Power consumption, Reduction of a configuration signaling quantity, and reduction of complicity of DRX functionality operation. For saving UE power, please refer to Fig. 3, which illustrates a flowchart of an exemplary process 30. The process 30 is utilized in the UE for managing DRX functionality with multiple component carriers in a wireless communication system. The process 30 can be compiled into the program code 214 and includes the following steps:
- Step 300:: Start.
- Step 302:: Separately manage DRX functionality of a plurality of component carriers.
- Step 304:: End.

According to the process 30, the UE manages DRX functionality in each of the plurality of component carriers with an independent DRX configuration set. For example, when at least a DRX configuration set for configuring ones of the component carriers is received, the DRX functionality of the configured component carriers is activated, and the DRX functionality of the component carriers that are not configured is not activated. The UE separately performs the DRX functionality for those component carriers whose DRX functionality has been activated.

The DRX configuration sets can be included in a RRC message sent by the network, such as the cells C1-Cn. Content of each DRX configuration set can include a parameter set of Active Time, Short DRX cycle, Long DRX cycle. In addition, some of the component carriers can belong to the same cell, and some belong to different cells. For the component carriers associated to the same cell, corresponding DRX configuration sets can have the same DRX configuration content. If the contents of the DRX configuration sets are the same, timing of monitoring the PDCCHs of the configured component carriers are the same. Otherwise, the timing of monitoring the PDCCHs of the configured component carriers are different.

For DRX functionality activation, the UE can activate the DRX functionality for a certain component carrier when a DRX command is received in this component carrier. Alternatively, the UE can activate the DRX functionality for a component carrier when a DRX command indicating this component carrier is received in any of other component carriers. Take an example associated with Fig. 1, the UE can receive a DRX command indicating the component carrier of the link L4 in the link L1, and thereby activates the DRX functionality for the link L4.

Take an UE with two component carriers as example. A UE is in RRC connected mode with two component carriers from two cells and has activated DRX functionality of both component carriers with two independent DRX configuration sets indicating on durations, i.e. cyclic active time and off durations, i.e. cyclic inactive time. The UE is not allowed to monitor a PDCCH of a component carrier during the off durations of the component carrier, but is allowed to do this during the on durations of the component carrier. When the UE has an uplink retransmission occurred in one of the component carriers, the UE only receives possible PDCCH grants on the component carrier related to the uplink retransmission in an active time in the off duration. As a result, the UE does not simultaneously perform monitoring of PDCCH grants from both of the component carriers in the active time in the off duration when only one component carriers is associated with an uplink retransmission, so as to avoid power waste on PDCCH monitoring in the active time in the off duration for the component carrier that is not associated with uplink retransmission.

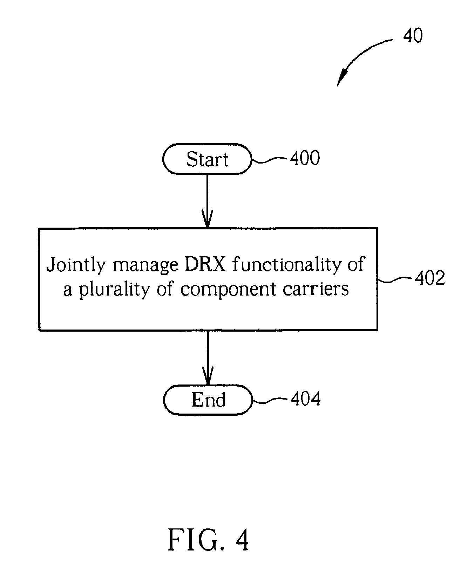

On the other hand, for reducing a configuration signaling quantity or complexity of DRX functionality operation, please refer to Fig. 4, which illustrates a flowchart of an exemplary process 40. The process 40 is utilized in the UE for managing the DRX functionality with multiple component carriers in a wireless communication system. The process 40 can be compiled into the program code 214 and includes the following steps:
- Step 400:: Start.
- Step 402:: Jointly manage DRX functionality of a plurality of component carriers.
- Step 404:: End.

According to the process 40, the UE manages DRX functionality in the plurality of component carriers with a DRX configuration set. For example, when a DRX configuration set is received in one of the component carriers, the UE jointly performs the DRX functionality for some or all of the component carriers whose DRX functionality has been activated. Therefore, the DRX signaling transmission for all of the component carriers of a single UE can be done through just one DRX configuration set. The signaling quantity is small and furthermore complexity problem of separately configuring each component carrier of each UE at the network side is avoided.

The abovementioned DRX configuration set can be included in a RRC message, which can indicate which component carriers shall be applied the DRX configuration set. Take an example associated with Fig. 1, the UE has activated DRX functionality of all component carriers of the links L1-Lm. Then, the UE receives a RRC message that includes a DRX configuration set and indicates the component carriers of the links L1 and L4. According to the RRC message, the UE applies the received DRX configuration set only on the component carriers of the links L1 and L4.

Consider a scenario based on the concept of the process 40. A UE is in RRC connected mode with two component carriers from two cells and has activated DRX functionality of both component carriers with the DRX configuration set indicating on durations and off durations. When the UE has an uplink retransmission occurred in one of the component carriers, the UE simultaneously receives possible PDCCH grants from both of the component carriers for the uplink retransmission, so as to avoid configuring a great number of the DRX configuration sets for monitoring the PDCCH signaling.

Based on the process 40, the UE can reduce the number of times for the DRX configuration set reception and related signalling quantity.

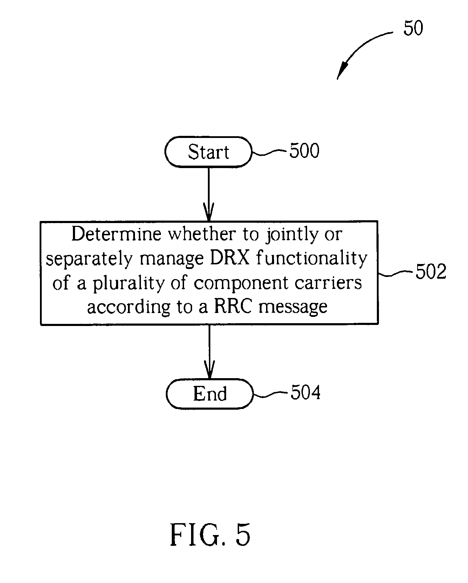

For a tradeoff between the concerns of the abovementioned processes, please refer to Fig. 5, which illustrates a flowchart of an exemplary process 50. The process 50 is utilized in the UE for managing the DRX functionality in multiple component carriers in a wireless communication system. The process 50 can be compiled into the program code 214 and includes the following steps:
- Step 500:: Start.
- Step 502:: Determine whether to jointly or separately manage DRX functionality of a plurality of component carriers according to a RRC message.
- Step 504:: End.

According to the process 50, the RRC message controls the UE to jointly or separately manage the DRX functionality for the plurality of component carriers. For example, when the RRC message includes a plurality of DRX configuration sets, the UE separately manages the DRX functionality for the plurality of component carriers. Otherwise, the UE jointly manages the DRX functionality for the plurality of component carriers. For another example, new information element can be defined in the RRC message. The UE jointly or separately manages the DRX functionality for the plurality of component carriers according to the new information element. Therefore, the UE can be direct switch between two managing modes that are associated with the processes 30 and 40 respectively, depended on which concern dominates the wireless communication system.

Based on the process 50, the RRC message can determine ways of managing the DRX functionality of the plurality of component carriers, such as jointly or separately management, for reducing signalling quantity or DRX complexity or power consumption.

Please note that the abovementioned steps of the processes 30, 40, and 50 including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20.

In conclusion, the above-mentioned examples provide explicit, appropriate ways to manage the DRX functionality for multiple component carriers.

## Claims

1. A communication device (20) capable of managing DRX functionality in multiple component carriers for a wireless communication system, **characterized by** the communication device (20) comprising:
means for separately managing DRX functionality of a plurality of component carriers (302).

2. A method of managing discontinuous reception (DRX) functionality in multiple component carriers for a mobile device of a wireless communication system, **characterized by** the method comprising:
separately managing DRX functionality of a plurality of component carriers (302).

3. The communication device (20) of claim 1, wherein the means for separately managing the DRX functionality of the plurality of component carriers comprises:
means for obtaining a plurality of DRX configuration sets each for configuring one of the plurality of component carriers; and
means for activating the DRX functionality for the configured component carriers according to the obtained DRX configuration sets, or the method of claim 2, wherein separately managing the DRX functionality of the plurality of component carriers comprises:
obtaining a plurality of DRX configuration sets each for configuring one of the plurality of component carriers; and
activating the DRX functionality for the configured component carriers according to the obtained DRX configuration sets.

4. The communication device (20) or the method of claim 3, wherein the DRX configuration sets are included in a radio resource control (RRC) message received from a network of the wireless communication system.

5. The communication device (20) or the method of claim 3, wherein the obtained DRX configuration sets for the configured component carriers belonging to a cell have the same DRX configuration content.

6. The communication device (20) of claim 1, wherein the means for separately managing the DRX functionality of the plurality of component carriers comprises means for activating the DRX functionality for one of the component carriers when a DRX command is received in the component carrier, or the method of claim 2, wherein separately managing the DRX functionality of the plurality of component carriers comprises activating the DRX functionality for one of the component carriers when a DRX command is received in the component carrier.

7. The communication device (20) of claim 1, wherein the means for separately managing the DRX functionality of the plurality of component carriers comprises means for activating the DRX functionality for one of the component carriers when a DRX command indicating the component carrier is received in any of the plurality of component carriers other than the component carrier, or the method of claim 2, wherein separately managing the DRX functionality of the plurality of component carriers comprises activating the DRX functionality for one of the component carriers when a DRX command indicating the component carrier is received in any of the plurality of component carriers other than the component carrier.

8. A communication device (20) capable of managing DRX functionality in multiple component carriers for a wireless communication system, **characterized by** the communication device (20) comprising:
means for jointly managing DRX functionality of a plurality of component carriers (402).

9. A method of managing discontinuous reception (DRX) functionality in multiple component carriers for a mobile device of a wireless communication system, **characterized by** the method comprising:
jointly managing DRX functionality of a plurality of component carriers (402).

10. The communication device (20) of claim 8, wherein the means for jointly managing the DRX functionality of the plurality of component carriers comprises:
means for obtaining a DRX configuration set for configuring ones of the plurality of component carriers; and
means for activating the DRX functionality for the configured component carriers according to the obtained DRX configuration set, or the method of claim 9, wherein jointly managing the DRX functionality of the plurality of component carriers comprises:
obtaining a DRX configuration set for configuring ones of the plurality of component carriers; and
activating the DRX functionality for the configured component carriers according to the obtained DRX configuration set.

11. The communication device (20) or the method of claim 10, wherein the DRX configuration set is included in a RRC message received from a network of the wireless communication system.

12. The communication device (20) or the method of claim 11, wherein the RRC message indicates which component carriers of the plurality of component carriers shall be applied the DRX configuration set.

13. A communication device (20) capable of managing DRX functionality in multiple component carriers for a wireless communication system, **characterized by** the communication device (20) comprising:
means for determining whether to jointly or separately manage DRX functionality of a plurality of component carriers according to a RRC message (502).

14. A method of managing discontinuous reception (DRX) functionality in multiple component carriers for a mobile device of a wireless communication system, **characterized by** the method comprising:
determining whether to jointly or separately manage DRX functionality of a plurality of component carriers according to a RRC message (502).

15. The communication device (20) of claim 13, wherein the means for determining whether to jointly or separately managing DRX functionality for a plurality of component carriers according to a RRC message comprises:
means for determining to separately manage the DRX functionality of the plurality of component carriers when the RRC message includes a plurality of DRX configuration sets, or the method of claim 14, wherein determining whether to jointly or separately managing DRX functionality for a plurality of component carriers according to a RRC message comprises:
determining to separately manage the DRX functionality of the plurality of component carriers when the RRC message includes a plurality of DRX configuration sets.
